# EUROPÄISCHE PATENTSCHRIFT

(11) **EP 2 051 884 B1**
(45) Veröffentlichungstag und Bekanntmachung des Hinweises auf die Patenterteilung: **06.04.2011**
(21) Anmeldenummer: 07788293.4
(22) Anmeldetag: 07.08.2007
(51) Int. Cl.: B60S 9/08

(54) **HÖHENVERSTELLBARE STÜTZE FÜR SATTELAUFLIEGER ODER DERGLEICHEN**
HEIGHT-ADJUSTABLE SUPPORT FOR SEMI-TRAILER OR SIMILAR
SUPPORT REGLABLE EN HAUTEUR DESTINE A DES SEMI-REMORQUES OU SIMILAIRES

(30) Priorität: 14.08.2006 DE 202006012472 U
(43) Veröffentlichungstag der Anmeldung: 29.04.2009
(73) Patentinhaber: SAF-HOLLAND Verkehrstechnik GmbH, 78224 Singen-Hohentwiel (DE)
(72) Erfinder: RIEDL, Reinhold, 63897 Miltenberg (DE)
(74) Vertreter: Bauer, Clemens
(86) Internationale Anmeldenummer: PCT/EP2007/058194
(87) Internationale Veröffentlichungsnummer: WO 2008/019973

(56) Entgegenhaltungen:
- WO-A-2006/028859
- DE-A1- 19 836 635
- US-A- 5 676 018

## Beschreibung

Die Erfindung bezieht sich auf eine höhenverstellbare Stütze für Sattelauflieger oder dergleichen gemäß dem Oberbegriff des Anspruchs 1.

Derartige Stützen sind, meist in paarweiser Anordnung, als Abstützvorrichtung im vorderen Bereich des Sattelaufliegers angeordnet.

Eine derartige Vorrichtung ist bekannt aus der EP 0 675 029. Dabei ist das Schaltgetriebe in einem Gehäuse untergebracht, welches frontal an das Stützenaußenrohr angebaut ist. Die Getriebeeingangswelle und die Getriebeausgangswelle, auf denen die Zahnräder drehfest sitzen, sind jeweils im Gehäuse und der dem Gehäuse gegenüberliegenden Wand des Stützenaußenrohres gelagert. Die Getriebeeingangswelle ist hier unter dem Kegelradsatz, sowie neben der Spindel, angeordnet. Die Getriebeausgangswelle befindet sich über dem Tellerrad, in dessen nach oben gerichteter Verzahnung das drehfest auf der Getriebeausgangswelle sitzende Kegelritzel eingreift. Die Getriebeeingangswelle kann mittels einer Handkurbel gedreht werden. Das auf der Getriebeeingangswelle angebrachte große Zahnrad ist im Eingriff mit dem kleineren, auf der Getriebeausgangswelle sitzenden Zahnrad für eine schnelle Höhenverstellung der Stütze vorgesehen. Und die durch das Ritzel auf der Getriebeeingangswelle mit dem großen Zahnrad am Zahnradsatz der Getriebeausgangswelle entstehende Übersetzung dient zur Höhenverstellung der Stütze unter Belastung. Sowohl im Lastgang als auch bei der schnelleren Höhenverstellung dieser Vorrichtung erfolgt jeweils der weitere Kraftfluß über den Kegelradsatz auf den Spindeltrieb, und diese Vorrichtung baut sehr sperrig.

Ein gattungsgemäßes Stützenpaar ist auch aus der EP 1 104 369 B1 bekannt. Das Schaltgetriebe dieser so genannten Vorrichtung zum Abstützen des Aufliegers eines Sattelschleppers ist nahezu vollständig innerhalb der Stütze angeordnet, wobei die Getriebeeingangswelle und die dazu außerhalb der Stützenmitte angeordnete Spindel in einem gemeinsamen Lagerbock lagern. Die Getriebeeingangswelle und die Getriebeausgangswelle sind in einer auf der Vorderwand des Stützenaußenrohres abstehend angebauten großen Abdeckung gelagert, die auch zur Vergrößerung des Einbauraumes für das Schaltgetriebe notwendig ist. Die auf die Spindel weisend angeordnete Getriebeeingangswelle besitzt ein Ritzel, das in ein durchmessergroßes Zahnrad eines mit der Getriebeausgangswelle einstückigen Radsatzes eingreift und die Übersetzung für eine Höhenverstellung unter Last bewirkt. Ein weiteres durchmessergroßes Zahnrad, das konzentrisch zur Getriebeeingangsweiie gelagert ist, lässt sich nach axialer Verschiebung der Getriebeeingangswelle mittels deren Ritzel koppeln und antreiben. Dabei greift das letztgenannte durchmessergroße Zahnrad in das zum Radsatz der Getriebeausgangswelle gehörende Ritzel ein, worüber die Übersetzung zu einem schnelleren Verstellen der Stütze ohne Last erfolgt. Am oberen Spindelende ist ein Tellerrad drehfest angeordnet, in dessen nach oben weisende Verzahnung das Kegelritzel der darüber angeordneten Getriebeausgangswelle eingreift. Der Kegelradsatz ist auch hier die zweite Übersetzungsstufe sowohl für den Lastgang als auch den schnelleren Verstellvorgang der Stütze.

Bei diesen bekannten Stützen ist besonders nachteilig, dass hinter dem Zahnradschaltgetriebe der Kraftfluß immer, d.h. sowohl beim Verstellen unter Last, dem Hebevorgang, als auch bei der Schnellverstellung, dem lastlosen Höhenverstellvorgang, über ein und dieselbe Kegelradstufe erfolgt. Die Kegelradstufe ist gemäß ihrer großen Untersetzung ins Langsame eigentlich nur für den Hebevorgang prädestiniert. Das hat zur Folge, dass bei der bisherigen Getriebekonzeption derartiger Stützen, die über die ins Schnelle übersetzende Zahnradstufe des Schaltgetriebes gewonnene Drehzahlerhöhung durch die Übersetzung ins Langsame des Kegelradsatzes zu einem sehr großen Teil wieder aufgehoben wird. Und, dass der nachfolgende Spindeltrieb das Stützeninnenrohr nur mit relativ mäßiger Geschwindigkeit verstellt, d.h. ausfährt oder einfährt, obgleich dieser unbefriedigende Vorgang branchenweit als Schnellgang zwecks Zeiteinsparung bezeichnet wird.

Die WO 2006/028 859 A2 zeigt eine höhenverstellbare Stütze für Sattelauflieger mit einem ortsfest angebrachten Stützenaußenrohr und einem darin angeordneten Stützeninnenrohr, welches über eine Getriebeanordnung höhenverstellbar ist, wobei die Getriebeanordnung ein Schaltgetriebe mit zwei Zahnradstufen und einer Kegelradanordnung aufweist.

Der Erfindung liegt die Aufgabe zugrunde eine höhenverstellbare Stütze für Sattetauflieger zu schaffen die einen besonders großen Schnellgang aufweist, um einen bedeutenden Zeitgewinn zu erzielen und bei der alle Getriebeteile im Stützenaußenrohr untergebracht sind, ohne dass ein den Einbauraum vergrößernder baulicher Aufwand erforderlich ist.

Diese Aufgabe ist erfindungsgemäß durch die im Anspruch 1 gekennzeichnete Stütze gelöst.

Für die erfindungsgemäße Stütze wird vorgeschlagen zum Betreiben im Schnellgang vom Schaltgetriebe in den Spindeltrieb eine separate Kraftübertragung vorzusehen. Dabei kann für den Lastbetrieb ein erster Kegelradsatz, wie bisher üblich, mit einer Übersetzung ins Langsame vorgesehen werden, der zusammen mit der ebenfalls ins Langsame übersetzenden Schaltgetriebestufe davor und dem danach angeordneten Spindeltrieb bezüglich der Handantriebskraft ergonomisch optimal ausgelegt ist. Der Kegelradsatz für den Schnellgang hingegen ist bezüglich seiner Übersetzung davon unabhängig erfindungsgemäß besonders vorteilhaft gestaltet, wenn er eine wesentlich direktere Übersetzung als der erstgenannte Kegelradsatz aufweist. So erbringt beispielsweise ein Übersetzungsverhältnis von 1:1 in der Praxis bereits mehr als eine Verdoppelung der Verstellgeschwindigkeit mit der entsprechenden Zeiteinsparung gegenüber den herkömmlichen Stützen.

Durch diese Gestaltung wird hervorragenderweise ermöglicht, dass die Tellerräder über der Getriebeausgangswelle angeordnet sein können.

Daher muß die Getriebeausgangswelle nicht mehr wie bisher über die Spindel und das Tellerrad hinweggeführt werden, was sich durch ihre nachteiligerweise daraus ergebende höhenmäßige Anordnung und vorgegebene Anbauhöhe bei herkömmlichen Stützen konstruktiv auf eine Verringerung des Hubes auswirkt.

In Weiterbildung sieht die Erfindung einen Lagerungentragteil vor, in dem die Getriebeausgangswelle sowie die Spindel und eine darin eingebaute Ritzeleinheit gemeinsam gelagert sind. Der Getriebebereich der Stütze gestaltet sich dadurch in sehr kompakter Weise.

Erfindungsgemäß besteht die im Lagerungentragteil anzuordnende Ritzeleinheit vorzugsweise in einstückiger Bauweise aus dem Ritzel der Schnellgangstufe und dem dazu gehörenden Kegelritzel sowie einer kleinen Welle. Es ist aber auch denkbar nur die genannten Ritzel drehfest zu verbinden und dazu eine kleine Achse zu verwenden.

Eine solche Radeinheit kann vorteilhafterweise von oben als Stück in das Lagerungentragteil eingesetzt werden. Und bedingt günstigerweise frontseitig an der Stütze keine Öffnung für die Montage.

Gemäß einer anderen erfindungsgemäßen Weiterbildung kann das Tellerrad für den Schnellgang gemeinsam mit dem Tellerrad für den Lastgang auf der Spindel befestigt sein, oder das Tellerrad für den Schnellgang wird am Tellerrad für den Lastgang, das auf der Spindel fixiert ist, befestigt.

Das Tellerrad für den Lastgang kann auch mit einer zweiten Kegelradverzahnung versehen sein, die dem Tellerrad für den Schnellgang entspricht, so dass letzteres als Teil vorteilhafterweise entfällt.

Und wirtschaftlicherweise können dabei die Kegelverzahnungen für den Schnellgang wegen geringerer Beanspruchung schwächer dimensioniert werden als jene für den Lastgang.

Die vier Zahnräder des Schaltgetriebes sind so angeordnet, dass das Zahnrad und das Ritzel der Schnellgangstufe vor und das Zahnrad mit dem Ritzel der Lastgangstufe hinter der Spindel angeordnet sind.

Aufgrund dieser erfindungsgemäßen Gestaltung kann die Spindel zentral platziert werden und die vorteilhafterweise kurz zu gestaltende Getriebeausgangswelle kann hinter der Spindel, von dieser wegzeigend angeordnet sein.

Wenn die Getriebeeingangswelle erfindungsgemäß mit vorzugsweise zwei radial abstehenden Mitnehmern ais Kupplungsmittei versehen ist, können diese nach entsprechendem Einschalten das lose auf der Getriebeeingangswelle gelagerte große Zahnrad der Schnellgangstufe mitnehmen, oder für den Lastgang das Drehmoment auf das dafür vorgesehene Ritzel überleiten, sowie in einer Zwischenstellung einen Freigang bewirken. Auf diese Weise ist eine kostengünstige Schaltung realisiert.

Das Ritzel der Lastgangstufe des Schaltgetriebes ist vorteilhafterweise mit einem hohlen Schaft versehen, in dem die Getriebeeingangswelle axialverschiebbar gelagert werden kann. Günstigerweise sind am Hohlschaft dieses Ritzels erfindungsgemäß auch die erforderlichen Eingriffbereiche für die Mitnehmer der Getriebeeingangswelle ausgestaltbar.

Die Getriebeausgangswelle ist in vorteilhafter Weiterbildung der Erfindung vorzugsweise ein Teil mit quadratischem Querschnitt und einem zylindrischen Lagerzapfen und kann formschlüssig in die Zahnrad-/Kegelradstufe eingeschoben werden, was sehr montagevereinfachend ist.

Es wird als andere Weiterentwicklung der Erfindung vorgeschlagen an der Stütze eines Stützenpaares, die kein Schaltgetriebe aufweist und die über einer Verbindungswelle an die Getriebeausgangswelle der mit einer Handkurbel antreibbaren Stütze mit Schaltgetriebe angeschlossen ist, einen Motor so anzubauen, dass er das Hohlschaftritzel antreiben kann.

Dadurch wird vorteilhafterweise ein motorischer Antrieb des Stützenpaares z. B. für einen automatisierten Auf- und Absattelbetrieb bei Sattelzügen ermöglicht und der Handbetrieb kann zur Alternative für den Sonder- oder Notfall werden.

In einer Lagerflanschhülse sind drei Radialnuten für das wahlweise Einrasten eines in der Getriebeeingangswelle sitzenden Kugelfederelements zwecks Arretierung der Schaltstellungen der Getriebeeingangswelle vorgesehen.

Damit wird in eingerasteter Mittelstellung, bei dem vorgenannten motorischen Betrieb vorteilhaft sichergestellt, dass das Schaltgetriebe des Handantriebs im Freigang bleibt.

Als andere Ausgestaltung der Erfindung wird für den separaten Schnellgangkraftfluß zum Spindeltrieb eine Zwischentriebeinheit mit einem Zahnritzel sowie einem Kegelritzel vorgeschlagen, die axial vor einer Zahnrad- und Kegelritzelanordnung für den Lastgang vorzusehen ist. In die Zahnrad- und Kegelritzelanordnung kann günstigerweise auf der Stützenrückseite von außen formschlüssig ein Getriebeausgangszapfen eingesetzt sein, worüber die zweite Stütze eines Stützenpaares angetrieben werden kann.

Die Spindel mit darauf angeordneten Tellerrädem, deren Verzahnungen nach oben weisen, kann dabei in einer Lagerplatte abgelagert werden.

Vorteilhafterweise muß die Getriebeeingangswelle so eingebaut sein, dass sie in paralleler Anordnung zur Zwischentriebeinheit nur so weit in das Stützenaußenrohr hineinreicht, wie es der Breite des großen Zahnrades des Schnellgangs entspricht und ihre Lagerungstiefe im Hohlschaftritzel erfordert.

Die Zahnrad- und Kegelritzelelanordnung für den Lastgang kann vorteilhaft einstückig gestaltet und mit einem Lagerzapfen versehen werden, auf dem die Zwischentriebeinheit lagerbar ist.

Der Lagerzapfen für die Zwischentriebeinheit kann auch als Verlängerung am Getriebeausgangszapfen,der von hinten durch die Zahnrad- und Kegelritzelanordnung gesteckt wird, vorgesehen werden, was die Montage erleichtert.

Es ist von Vorteil die Zwischentriebeinheit einstückig dergestalt auszubilden, dass sie einerseits eine Lagerbohrung erhält, die auf dem Lagerzapfen der Zahnrad/Kegelritzeleinheit bzw. einem verlängerten Getriebeausgangszapfen lagert und auf der anderen Seite im vorderen Bereich der Stütze abgelagert wird.

Die Zwischentriebeinheit kann auch so gestaltet werden, dass sie anstatt einer Lagerbohrung einen Lagerzapfen aufweist, der in der Zahnrad- und Kegelritzelanordnung für den Lastgang oder auf dem Abtriebzapfen gelagert wird, wobei das Kegelrad formschlüssig angebracht ist, was eine günstige Montagemöglichkeit bewirkt.

Für eine weitere Ausgestaltung der erfindungsgemäßen Stütze wird vorgeschlagen eine Zahnrädertriebeinheit vorzusehen, die parallel zu der Zwischentriebeinheit und der Zahnrad-/Kegelritzeleinheit angeordnet ist und alternativ den Kraftfluß für den Schnellgang auf die Zwischentriebeinheit oder im Lastgang auf die Zahnrad-/Kegelritzeleinheit überträgt.

In vorzugsweise einstückiger Bauweise kann die Zahnrädertriebeinheit an einem Endbereich mit einem druchmessergroßen Zahnrad für den Schnellgangbetrieb und am anderen Ende mit einem Ritzel für den Lastgang ausgestaltet sein.

Die Zahnrädertriebeinheit kann drehfest und axial fixiert mit der Getriebeeingangswelle verbunden sein, die dazu zweckmäßiger Weise um ein noch geringeres Maß als in voraus beschriebener Ausgestaltung in das Stützenaußenrohr hineinrechen muß. Außer dieser Verbindung und der damit erfolgenden Lagerung der Zahnrädertriebeinheit ist es vorteilhaft die andere Seite der Zahnrädertriebeinheit auf einem an der Innenseite der Rückwand des Stützenaußenrohres vorzusehenden Lagerzapfen verschiebbar abzulagern.

Durch axiales Verschieben der Getriebeeingangswelle wird auch die Zahnradtriebeinheit entsprechend verschoben und entweder in Schnell- oder Lastgang- bzw. dazwischen in Leerlaufstellung gebracht. Bei dieser Ausgestaltung ist jeweils das nicht benutzte Zahnrad bzw. Ritzei außer Eingriff.

Die Stütze kann vorteilhaft auch mit einer tellerähnlichen und vorzugsweise mit quadratischem Rand gestalteten Lagerplatte für die Spindel versehen werden. In Abweichung von der Tellerform können dabei einzelne Randbereiche auch höher angeordnet sein.

Wenn außerdem die Mutter des Spindeltriebes anstatt über dem Stützeninnenrohr im Stützeninnenrohr angeordnet wird, kann das Stützeninnenrohr nutzbringend so weit nach oben verlängert werden, dass dessen obere Stirnseite in eingefahrener Stellung bis unmittelbar an die Unterseite des Randes der vorgeschlagenen tellerähnlichen Lagerplatte heranreicht.

Bei unterschiedlich höher gestalteten Randbereichen der Lagerplatte können die Seitenwände des Stützeninnenrohres unter stirnseitiger Abstufung bzw. mit Aussparungen versehen, auch noch entsprechend weiter nach oben verlängert werden. Dadurch entsteht die Möglichkeit, dass gemäß der Erfindung Stützen mit extrem geringer Gesamthöhe und relativ großem Hub gebaut werden können. Das ist in der Praxis besonders bei Stützen für Großraumsattelauflieger mit tiefliegenden Rahmen bezüglich der Bodenfreiheit von Vorteil. Und bei längeren Stützen für höhere Fahrzeuge ist nach dieser Ausgestaltung aufgrund nach oben verlängerter Stützeninnenrohre im ausgefahrenen Zustand eine größere Überdeckung der Stützenaußenrohre mit den Stützeninnenrohren vorhanden. Die Zunahme an Überdeckung erhöht in günstiger Weise die Quersteifigkeit und damit die Betriebssicherheit der Stützen.

Schließlich erweist es sich bezüglich der Zahnräderauslegung günstig, wenn die oberhalb der Zwischentriebeinheit des Schnellgangs angeordnete Getriebeeingangswelle von der Zwischentriebeinheit seitlich versetzt eingebaut wird.

Vorteilhafte Ausgestaltungen der Erfindung gehen aus den Unteransprüchen hervor.

Die Erfindung wird anschließend anhand der Zeichnungen erläutert.

Es zeigen:
Fig. 1 eine Vorderansicht der erfindungsgemäßen Stütze,
Fig. 2 eine Seitenansicht der in Fig. 1 gezeigten Stütze,
Fig. 3 einen Längsschnitt der in Fig. 1 gezeigten Stütze entlang der Linie A-A, mit dem Schaltgetriebe in Stellung Schnellgang,
Fig. 4 einen zweiten Längsschnitt analog Fig. 2, wobei das Schaltgetriebe in Stellung Lastgang zu sehen ist,
Fig. 5 einen dritten Längsschnitt analog Fig. 2, wobei das Schaltgetriebe in Stellung Schnellgang zu sehen ist,
Fig. 6 einen vierten Längsschnitt analog Fig. 2, wobei das Schaltgetriebe in Stellung Schnellgang zu sehen ist,
Fig. 7 einen fünften Längsschnitt analog Fig. 2, wobei das Schaltgetriebe in Stellung Schnellgang zu sehen ist,
Fig. 8 einen sechsten Längsschnitt analog Fig. 2, wobei das Schaltgetriebe in Stellung Schnellgang zu sehen ist,
Fig. 9 einen siebten Längsschnitt analog Fig. 2, wobei das Schaltgetriebe in Stellung Schnellgang zu sehen ist und
Fig. 10 eine Vorderansicht des oberen Stützenbereichs.

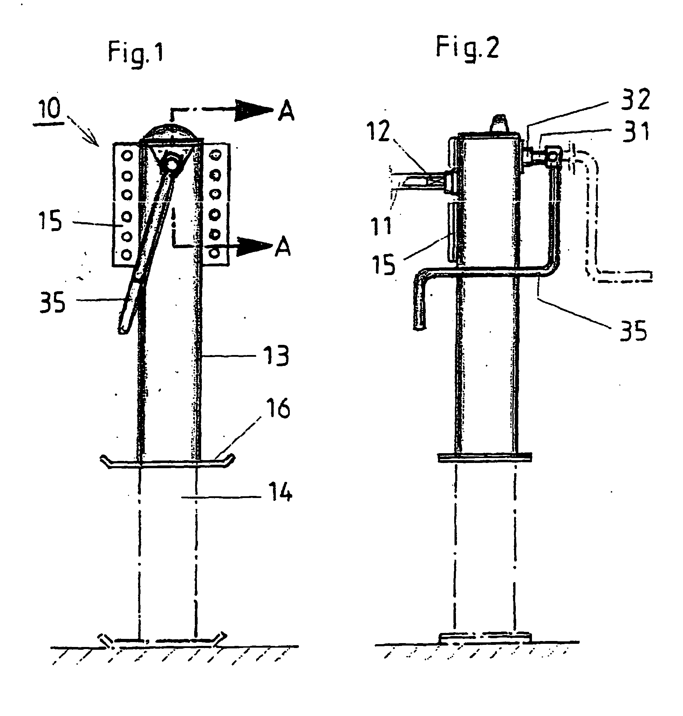

Die in Fig. 1 bis 9 gezeigte Stütze 10 wird paarweise am Chassis eines Sattelaufliegers in dessen vorderen Bereich befestigt. Die Stützen 10 eines Paares sind mittels einer Verbindungswelle 11 an den Getriebeausgangswellen 12 miteinander verbunden und in Transportstellung eingefahren, d.h. in verkürztem Zustand. Und bevor der Sattelauflieger vom Sattelschlepper abgekuppelt wird, werden sie ausgefahren.

Die Stütze 10 weist ein Stützenaußenrohr 13 und ein darin längsverschiebbar gelagertes Stützeninnenrohr 14 auf. Das Stützenaußenrohr 13 und das Stützeninnenrohr 14 besitzen vorzugsweise quadratische Querschnitte. Die Stütze 10 wird über eine am Stützenaußenrohr 13 sitzende Anschraubplatte 15 am Sattelaufliegerrahmen befestigt. Am unteren Ende des Stützeninnenrohres 14 ist ein Fuß 16 zum Aufsetzen auf den Boden befestigt. Ferner weist die Stütze 10 eine Spindel 17 mit einer Mutter 18 auf.

Wie Fig. 1 bis 4 zeigen sitzt auf der Spindelschulter ein Axiallager 19, das sich an einem im Stützenaußenrohr 13 befestigten Lagerungentragteil 20 abstützt. Im Lagerungentragteil 20 sind die Getriebeausgangswelle 12, die Spindel 17 und eine Ritzeleinheit 21 gemeinsam gelagert. Die Ritzeleinheit 21 besteht in einstückiger Bauweise aus einem Ritzel 21 a, einem Kegelritzel 21 b und einer kleinen Welle 21 c. Zum Einbau und der Lagerung der Ritzeleinheit 21 besitzt der Lagerungentragteil 20 Taschen 22, 23 und nach oben offene Lagerstellen 24. Gleichermaßen weist der Lagerungentragteil 20 eine größere Tasche 25 für den Einbau eines Zahnrades 26 und eines Kegelritzels 27 der Lastgangstufe des Schaltgetriebes auf. Auf dem Lagerungentragteil 20 befinden sich ein großes Tellerrad 28 für den Lastgang und ein kleines Tellerrad 29 für den Schnellgang. Die Tellerräder 28,29 sind gemeinsam drehfest und axial unverschiebbar mit dem Zapfen der Spindel 17 verbunden. Die Verzahnungen der Tellerräder 28,29 weisen nach unten. Das Tellerrad 28 kämmt mit dem darunter, auf der Getriebeausgangswelle 12 sitzenden Kegelritzel 27. Und in das Tellerrad 29 greift das Kegelritzel 21 b der Ritzeleinheit 21 von unten ein.

Die kurz gestaltete Getriebeausgangswelle 12 besitzt einen quadratischen Querschnitt mit einem zylindrischen Lagerzapfen, ist einfach formschlüssig in das mit dem Kegelritzel 27 verbundenen Zahnrad 26 eingeschoben und zwecks axialer Fixierung mit einer Bundbuchse verstiftet. Achsparallel zur Getriebeausgangswelle 12 und über den Tellerrädem 28,29 ist ein Hohlschaftritzel 30 angeordnet, das in das Zahnrad 26 eingreift. Das Hohlschaftritzel 30 ist auf der hinteren Seite in der Rückwand des Stützenaußenrohres gelagert und in seinem Hohlschaft lagert koaxial eine längsverschiebbare Getriebeeingangswelle 31, welche ihre zweite Lagerung in einer an der Vorderseite des Stützen-außenrohres 13 sitzenden Lagerflanschhülse 32 hat.

Zwischen der vorderen Stirnseite des Hohlschaftritzels 30 und einer In der Wand des Stützenaußenrohres 13 sitzenden Bundbuchse 33 befindet sich ein lose auf der Getriebeingangswelle 31 gelagertes Zahnrad 34, welches zur Schnellgangstufe des Schaltgetriebes gehört. In der Bohrung des Zahnrades 34 befinden sich zwei Axialnuten 34a und der Vorderbereich des Hohlschaftritzels 30 weist eine zylindrische Einsenkung 30a sowie einen durchgehenden Querschlitz 30b auf, welcher der Breite der Axialnuten 34a entspricht.

Die Getriebeeingangswelle 31 besitzt zwei radial abstehende Mitnehmer 31 a, die nach entsprechender Axialverschiebung der Getriebeeingangswelle 31 entweder in die Axialnuten 34a oder in den Querschlitz 30b eingreifen können um das über eine abklappbare Handkurbel 35 erzeugte Drehmoment wahlweise auf die Schnellgang oder die Lastgangstufe des Schaltgetriebes weiterleiten zu können. Und wenn die Mitnehmer 31 a als Zwischenstellung in den Bereich der Einsenkung 30a gebracht werden, besteht ein Freigang.

Für ein axiales Arretieren der Getriebeeingangswelle 31 gegen ungewolltes Verschieben beim Kurbeln und zur Sicherstellung, dass der Handantriebsmechanismus bei motorischem Betrieb eines Stützenpaares sicher abgeschaltet bleibt, sind in der Lagerflanschhülse 32 drei Radialnuten 32a vorgesehen, in die wahlweise ein in der Getriebeeingangswelle 31 platziertes Kugelfederelement 31 b einrastet.

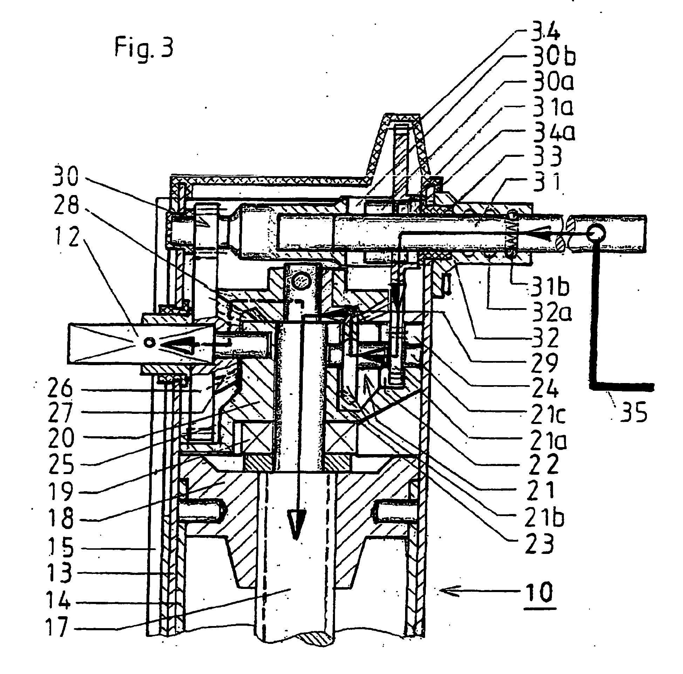

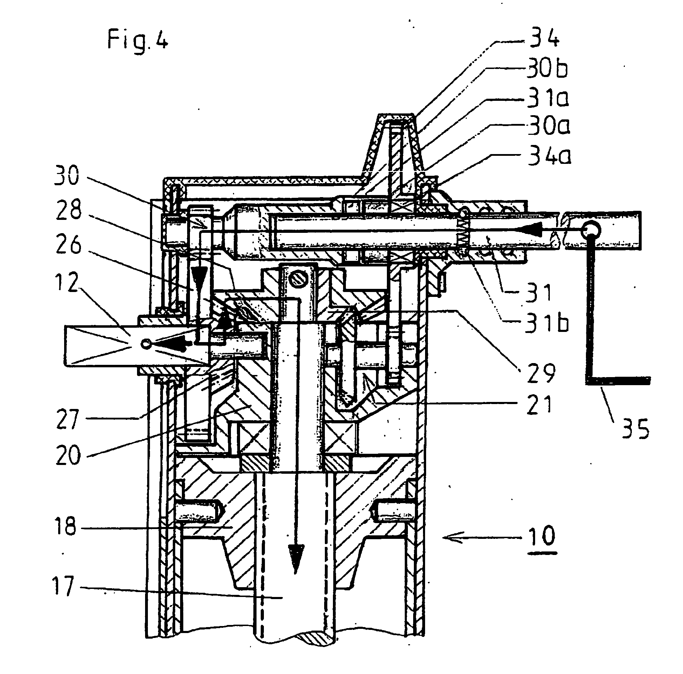

Zur Veranschaulichung der Funktion des Schaltgetriebes ist in Fig. 3 der Kraftfluß im Schnellgang in Form von mit Pfeilen versehene Linien schematisch dargestellt. Die Strichpunktlinien zeigen den Abtrieb zur Nachbarstütze. In gleicher Weise wird in Fig. 4 der Kraftfluß im Lastgang gezeigt.

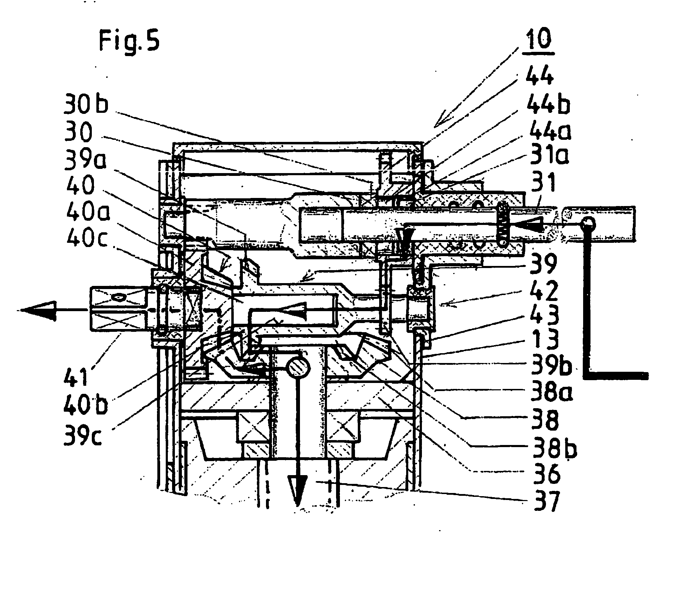

Die in Fig. 5 gezeigte erfindungsgemäße Stütze 10 mit in einer Lagerplatte 36 gelagerten Spindel 37 auf der ein Tellerrad 38 mit zwei konzentrischen Verzahnungen 38a/38b sitzt, weist eine Zwischentriebeinheit 39 für den Schellgang und einen Zahnrad-/Kegelritzeleinheit 40 für den Lastgang auf. Die Zahnrad/Kegelritzeleinheit 40 besteht aus einem Zahnrad 40a und einem Kegelritzel 40b und ist mit einem Lagerzapfen 40c versehen, auf dem die Zwischentriebeinheit 39 drehbar in der Lagerbohrung 39c gelagert ist. Axial gegenüber ihres Lagerzapfens 40c ist in die Zahnrad-/Kegelritzeleinheit 40 ein Getriebeausgangszapfen 41 formschlüssig und axial fixiert eingesetzt, der auch zu deren Ablagerung in der Rückwand der Stütze 10 dient.

Die Zwischentriebeinheit 39 besteht aus einem Hohlschaft wobei auf dessen offener Seite ein Kegelrad 39a sitzt und auf dem entgegengesetzt anschließenden Bereich ein Ritzel 39b angeordnet ist. Das Endstück der Zwischentriebeinheit 39 dient zur Lagerung 42 derselben im vorderen Bereich des Stützenaußenrohres 13. Die Lagerung 42 der Zwischentriebeinheit 39 ist so gestaltet, dass sie in einem Deckel 43 befindlich in das Außenrohr 13 der Stütze 10 hineinragt.

Auf der Getriebeeingangswelle 31 befindet sich ein drehbewegliches durchmessergroßes Zahnrad 44 für den Schnellgang. Das Zahnrad 44 besitzt innen außer Axialnuten 44a zur Drehmitnahme durch Mitnehmer 31 a der Getriebeeingangswelle 31 auch eine zylindrische Einsenkung 44b für die Freigangstellung der Mitnehmer 31 a. Die axiale Stellung der Getriebeeingangswelle 31 ist in Schnellgangstellung dargestellt. Der Kraftverlauf in Schnellgangstellung ist von der Getriebeeingangswelle 31 über das Zahnrad 44 und das Ritzel 30b auf die Zwischentriebeinheit 39 und über deren Kegelrad 39a auf die Verzahnung 38b des Tellerrad 38 zum Spindeltrieb (s. Pfeillinie in Fig. 5)

Gleichzeitige wird ein Teil des Drehmoments vom Tellerrad 38 über dessen Verzahnung 38a auf das Kegelritzel 40b und über den Getriebeabtriebszapfen 41 und die Verbindungswelle 11 (s. Fig. 1) auf die Nachbarstütze übertragen (s. strichpunktierte Pfeillinie in Fig. 5). Bei dieser Ausgestaltung der Stütze 10 ist das Hohlschaftritzel 30 an der Stirnseite des Hohlschaftes lediglich mit Querschlitzen 30b versehen in welche nach dem Umschalten der Getriebeeingangswelle 31 deren Mitnehmer 31 a eingreifen und der Lastgang in der früher beschrieben Weise bewerkstelligt wird.

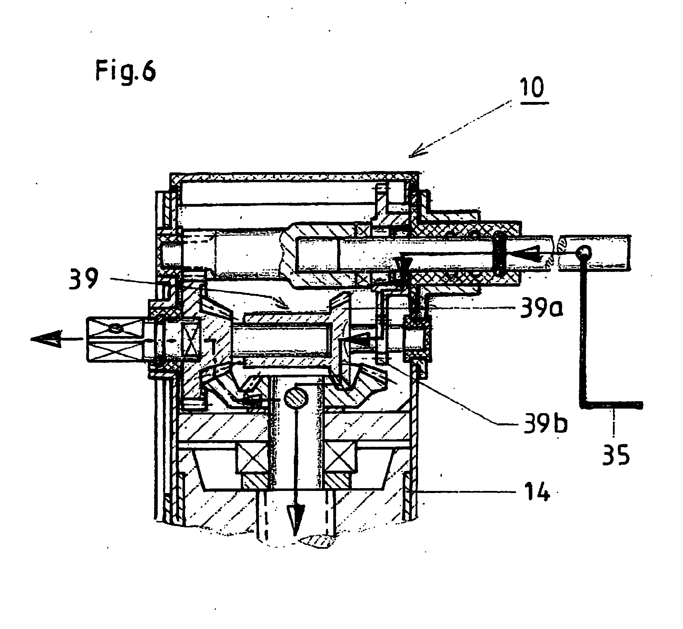

Bei der in Fig. 6 gezeigten Stütze 10 befindet ist im Gegensatz zu der in Fig. 5 gezeigten das Kegelrad 39a der Zwischentriebeinheit 39 am anderen Endbereiches deren Hohlschaftes. Funktionell unterscheidet sich diese Ausgestaltung daher vorteilhaft von den am Markt befindlichen Sattelaufliegerstützen durch einen entgegengesetzten Antriebsdrehsinn des Schnellgangs und des Lastgangs. Der Drehsinn der Handkurbel 35 kann nämlich im Schnellgang, d.h. ohne Last beim Ausfahren (Ablassen) des Stützeninnenrohres 13 so gestaltet werden, dass zwangsläufig entgegengesetzt des Uhrzeigersinns leicht zu kurbeln ist. Wohingegen das Einfahren (Einziehen) des Stützenihnenrohres 13, bei zwangsläufig höherem erforderlichen Kurbeldruck im Uhrzeigersinn bequemer gekurbelt werden kann. Hingegen kann im Lastgang das Ausfahren, des Stützeninnenrohres 13 d.h. das Anheben der Last weiter, wie bisher im Uhrzeigersinn drehend gut bewerkstelligen werden. Der Kraftfluß im Schnellgang ist mit Pfeil- bzw. strichpunktierten Linien in Fig. 6 dargstellt.

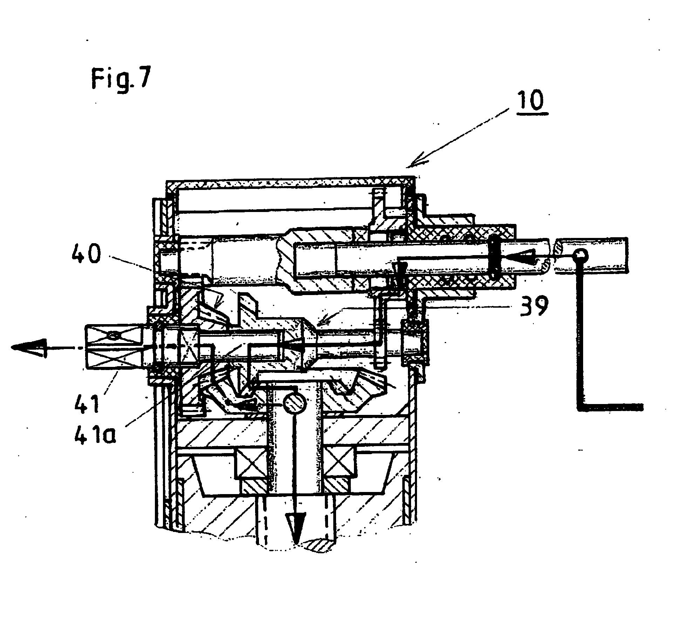

In Fig. 7 wird wir eine Stütze 10 gezeigt bei der abweichend zu Fig. 5 der Getriebeausgangszapfen 41 mit einem Lagerzapfen 41a versehen ist, der formschlüssig teilweise in der Zahnrad-/Kegelritzeleinheit 40 steckt und auf dem außerdem die Zwischentriebseinheit 39 drehbar gelagert ist. Die Funktion ist wie zu Fig. 5 beschreiben.

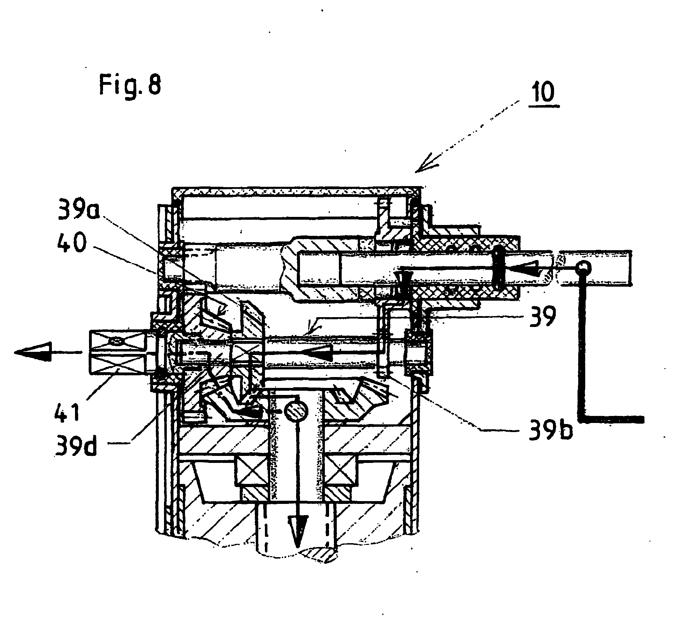

Fig. 8 zeigt eine Stütze 10 gemäß Fig. 5 jedoch mit einer Zwischentriebeinheit 39, die vollzylindrisch ist und einen zweiten, Lagerzapfen 39c aufweist, der drehbar in der Zahnrad-/Kegelritzeleinheit 40 und dem Getriebeausgangszapfen 41 gelagert ist. Und das Kegelrad 39a ist drehfest aufgesteckt. Die Funktion ist wie zu Fig. 5 beschreiben.

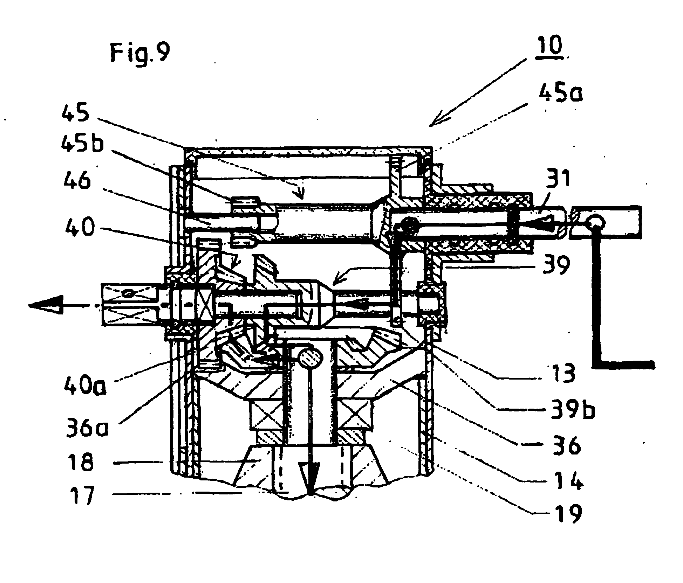

Die in Fig. 9 gezeigten Stütze 10 besitzt eine Zahnrädertriebeinheit 45, die ein Zahnrad 45a und ein Ritzel 45b aufweist. Die Zahnradtriebeinheit 45 ist einerseits auf der Getriebeeingangswelle 31 sitzend mit dieser durch eine Verstiftung drehfest und axial gekoppelt verbunden. Und die andere Seite der Zahnrädertriebeinheit 45 lagert axialverschiebbar auf einem Lagerzapfen 46 der an der Innenseite der Rückwand des Stützenaußenrohres 13 sitzt. Im Schnellgang der Stütze 10 kämmt das Zahnrad 45a der Zahnradtriebeinheit 45 mit dem Ritzel 39b der Zwischentriebeinheit 39 und es erfolgt der Kraftfluß gemäß der in Fig. 9 eingezeichneten Pfeillinien. Wenn die Getriebeeingangswelle 31 zwecks Umschaltung auf den Lastgang so weit wie möglich eingeschoben wird kommt das Ritzel 45b der Zwischentriebeinheit 39 in Eingriff mit dem Zahnrad 40a der Zahnrad-/Kegelritzeleinheit 40 und der Kraftfluß ist dann gemäß den vorher beschriebnen Ausgestaltungen realisierbar. In einer axialen Zwischenstellung der Zahnrädertriebeinheit 45 ist das Zahnrad 45a und das Ritzel 45b außer Eingriff, was der Schaltung in Leerlaufstellung entspricht.

Fig. 9 zeigt ferner die Lagerplatte (36) in einer tellerähnlichen Ausgestaltung, wobei in einem Randbereich eine Ausnehmung (36a) vorgesehen ist, in die das Zahnrad (40a) hineinreicht. Der Rand der tellerartigen Lagerplatte (36) ist mit dem Stützenaußenrohr (13) verschweißt. Das Stützeninnenrohr (14) reicht in seiner hier gezeigten Transportstellung bis unmittelbar an den unteren Bereich des Randes der tellerförmigen Lagerplatte (36). Die Mutter (18) ist in nicht gezeigter Weise im Stützeninnenrohr (14) fixiert.

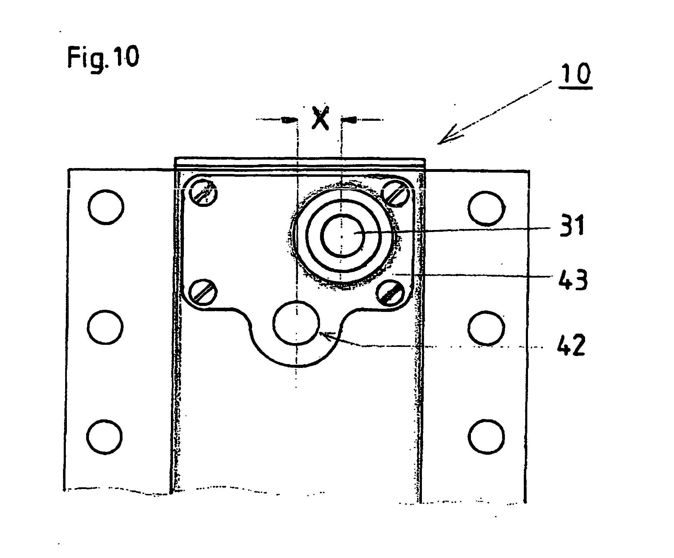

Fig. 10 schließlich zeigt eine Ausgestaltung der Stütze bei der die oberhalb der Zwischentriebeinheit 39 des Schnellgangs angeordnete Getriebeeingangswelle 31 um z.B. ein Maß X seitlich von der Zwischentriebeinheit 39 versetzt eingebaut wird.

### Bezugszeichenliste

- 10: Stütze
- 11: Verbindungswelle
- 12: Getriebeausgangswelle
- 13: Stützenaußenrohr
- 14: Stützeninnenrohr
- 15: Anschraubplatte
- 16: Fuß
- 17: Spindel
- 18: Mutter
- 19: Axiallager
- 20: Lagerungentragteil
- 21: Ritzeleinheit
- 21a: Ritzel
- 21b: Kegelritzel
- 21c: Welle
- 22: Tasche
- 23: Tasche
- 24: Lagerstelle
- 25: Tasche
- 26: Zahnrad
- 27: Kegelritze
- 28: Tellerrad
- 29: Tellerrad
- 30: Hohlschaftritzel
- 30a: Einsenkung
- 30b: Querschlitz
- 31: Getriebeeingangswelle
- 31a: Mitnehmer
- 31b: Kugelfederelement
- 32: Lagerflanschhülse
- 32a: Radialnut
- 33: Bundbuchse
- 34: Zahnrad
- 34a: Axialnut
- 35: Handkurbel
- 36: Lagerplatte
- 36a: Ausnehmung
- 37: Spindel
- 38: Tellerrad
- 39: Zwischentriebeinheit
- 39a: Kegelrad
- 39b: Ritzel
- 39c: Lagerbohrung
- 39d: Lagerzapfen
- 40: Zahnrad-/Kegetritzeleinheit
- 40a: Zahnrad
- 40b: Kegelritzel
- 40c: Lagerzapfen
- 41: Getriebeausgangszapfen
- 41a: Lagerzapfen
- 42: Lagerung
- 43: Deckel
- 44: Zahnrad
- 44a: Axialnut
- 44b: Einsenkung
- 45: Zahnrädertriebeinheit
- 45a: Zahnrad
- 45b: Ritzel
- 46: Lagerzapfen

## Patentansprüche

1. Höhenverstellbare Stütze (10) für Sattelauflieger oder dergleichen mit einem ortsfest angebrachten Stützenaußenrohr (13), einem darin höhenverstellbar angeordneten Stützeninnenrohr (14) das an einer Mutter (18) befestigt ist, die sich auf einer Spindel (17) befindet, welche über ein Schaltgetriebe und eine Kegelradanordnung antreibbar ist, wobei das Schaltgetriebe zwei Zahnradstufen aufweist, die alternativ einschaltbar sind, und wobei für den Kraftfluß nach jeder Zahnradstufe des Schaltgetriebes eine separate Getriebestufe mit Kegelradverzahnungen vorhanden ist, **dadurch gekennzeichnet, dass** die Verzahnungen der Tellerräder (28,29) nach unten weisen.

2. Stütze nach Anspruch 1, **dadurch gekennzeichnet, dass** die Getriebestufen Kegelradpaare sind, die aus einem ersten Kegelritzel (21b) mit einem Tellerrad (29) und einem zweiten Kegelritzel (27) mit einem Tellerrad (28) bestehen.

3. Stütze nach Anspruch 1, **dadurch gekennzeichnet, dass** die Getriebestufen aus den Kegelritzeln (27, 21 b) und nur dem Tellerrad (28) bestehen, wobei das Tellerrad (28) eine zusätzliche Verzahnung aufweist, die adäquat dem Kegelrad (29) ist und das Tellerrad (29) ersetzt.

4. Stütze nach Anspruch 1 bis 3, **dadurch gekennzeichnet, dass** das Tellerrad (28) und/oder das Tellerrad (29) über einer Getriebeausgangswelle (12) angeordnet ist bzw. sind.

5. Stütze nach Anspruch 1, **dadurch gekennzeichnet, dass** die Getriebeausgangswelle (12) und die Spindel (17) als auch die Ritzeleinheit (21) gemeinsam in einem Lagerungentragteil (20) gelagert sind.

6. Stütze nach Anspruch 1 und 5 **dadurch gekennzeichnet, dass** im Lagerungentragteil (20) Taschen (22,23,25) sowie oben offene Lagerstellen (24) vorhanden sind.

7. Stütze nach Anspruch 1,5 und 6, **dadurch gekennzeichnet, dass** die Ritzeleinheit (21) in das Lagerungentragteil (20) eingebaut ist

8. Stütze nach Anspruch 1, **dadurch gekennzeichnet, dass** die Ritzeleinheit (21) in einstückiger Bauweise aus dem Ritzel (21 a) und dem Kegelritzel (21 b) sowie einer Welle (21c) besteht oder eine lose Achse besitzt.

9. Stütze nach Anspruch 1, **dadurch gekennzeichnet, dass** das Schaltgetriebe zwei Zahnräder (34,26) und zwei Ritzel (21a, 30) aufweist, wobei das Zahnrad (34) und das Ritzel (21 a) der Schnellgangstufe vor und das Zahnrad (26) mit dem Ritzelbereich des Hohtschaftritzels (30) für die Lastgangstufe hinter der Achse der Spindel (17) angeordnet sind.

10. Stütze nach Anspruch 1, **dadurch gekennzeichnet, dass** die Getriebeausgangswelle (12) hinter der Spindel (17) angeordnet ist.

11. Stütze nach Anspruch 1, **dadurch gekennzeichnet, dass** ein Hohlschaftritzel (30) vorhanden ist, in dem die Getriebeeingangswelle (31) gelagert ist und an dessen Endbereich eine zylindrische Einsenkung (30a) sowie ein durchgehender Querschlitz (30b) vorhanden Ist.

12. Stütze nach Anspruch 1, **dadurch gekennzeichnet, dass** die Getriebeeingangswelle (31) radial abstehende Mitnehmer (31 a) aufweist, die als Kupplungsteile der Getriebeeingangswelle (31) dienen und wahlweise mit dem mit Axialnuten (34a) ausgestatteten Zahnrad (34) oder mit dem Hohlschaftritzel (30) in Eingriff gebracht werden.

13. Stütze nach Anspruch 1, **dadurch gekennzeichnet, dass** die Getriebeausgangswelle (12) einen vorwiegend quadratischen Querschnitt aufweist, der formschlüssig im Zahnrad (26) sitzt und über eine Bundbüchse axial fixiert ist.

14. Stütze nach Anspruch 1, **dadurch gekennzeichnet, dass** an einer mittels der Verbindungswelle (11) angeschlossenen Stütze (10) ein Motor so angebaut ist, dass er das Hohlschaftritzel (30) antreiben kann.

## Claims

1. A height-adjustable support (10) for semitrailers or the like, comprising a fixed-mounted support outer tube (13), a support inner tube (14), which is disposed in a height-adjustable manner therein and is fastened to a nut (18) present on a spindle (17), which spindle is drivable via a speed-change gear mechanism and a bevel gear arrangement, the speed-change gear mechanism having two gearwheel stages which are alternately engageable, and wherein for the power flow after each gearwheel stage of the speed-change gear mechanism a separate transmission stage with bevel gear toothings is present, **characterized in that** the toothings of the ring gears (28, 29) point downward.

2. The support as claimed in claim 1, **characterized in that** the transmission stages are bevel gear pairs, consisting of a first bevel pinion (21 b) with a ring gear (29) and a second bevel pinion (27) with a ring gear (28).

3. The support as claimed in claim 1, **characterized in that** the transmission stages consist of the bevel pinions (27, 21 b) and just the ring gear (28), the ring gear (28) having an additional toothing which is appropriate to the bevel gear (29) and replaces the ring gear (29).

4. The support as claimed in claims 1 to 3, **characterized in that** the ring gear (28) and/or the ring gear (29) are/is disposed above a transmission output shaft (12).

5. The support as claimed in claim 1, **characterized in that** the transmission output shaft (12) and the spindle (17), as well as the pinion unit (21), are jointly mounted in a mounting support part (20).

6. The support as claimed in claims 1 and 5, **characterized in that** pockets (22, 23, 25), as well as bearing points (24) which are open at the top, are present in the mounting support part (20).

7. The support as claimed in claims 1, 5 and 6, **characterized in that** the pinion unit (21) is installed in the mounting support part (20).

8. The support as claimed in claim 1, **characterized in that** the pinion unit (21) consists, in one-piece construction, of the pinion (21 a) and the bevel pinion (21 b), as well as of a shaft (21 c), and has a loose axle.

9. The support as claimed in claim 1, **characterized in that** the speed-change gear mechanism has two gearwheels (34, 26) and two pinions (21 a, 30), the gearwheel (34) and the pinion (21 a) of the high-speed gear stage being disposed in front of, and the gearwheel (26) with the pinion region of the hollow-shaft pinion (30) for the low-speed gear stage being disposed behind the axle of the spindle (17).

10. The support as claimed in claim 1, **characterized in that** the transmission output shaft (12) is disposed behind the spindle (17).

11. The support as claimed in claim 1, **characterized in that** a hollow-shaft pinion (30) is present, in which the transmission input shaft (31) is mounted and on the end region of which a cylindrical counterbore (30a), as well as a continuous transverse slot (30b), is present.

12. The support as claimed in claim 1, **characterized in that** the transmission input shaft (31) has radially protruding dogs (31 a), which serve as coupling parts of the transmission input shaft (31) and are selectively engaged with the gearwheel (34) equipped with axial grooves (34a), or with the hollow-shaft pinion (30).

13. The support as claimed in claim 1, **characterized in that** the transmission output shaft (12) has a predominantly square cross section, which is seated in a positively locking manner in the gearwheel (26) and is axially fixed by means of a collar bushing.

14. The support as claimed in claim 1, **characterized in that** a motor is attached to a support (10) connected by means of the connecting shaft (11), such that said motor can drive the hollow-shaft pinion (30).

## Revendications

1. Support réglable en hauteur (10) pour semi-remorque ou similaire, comprenant un tube extérieur de support (13) monté stationnaire, un tube intérieur de support (14) agencé dans celui-ci de façon déplaçable en hauteur, qui est fixé à un écrou (18), lequel se trouve sur une broche filetée (17) qui peut être entraînée via un mécanisme à changement de vitesse et un agencement à pignons coniques, dans lequel le mécanisme de changement de vitesse comporte deux étages d'engrenages qui peuvent être mis en service alternativement, et dans lequel, pour le transfert des forces, il est prévu un étage de mécanisme séparé avec des dentures coniques après chaque étage d'engrenages du mécanisme à changement de vitesse,
**caractérisé en ce que** les dentures des engrenages couronnes (28, 29) sont tournées vers le bas.

2. Support selon la revendication 1, **caractérisé en ce que** les étages d'engrenages sont des paires d'engrenages coniques, qui sont constitués d'un premier pignon conique (21 b) avec une couronne (29), et d'un second pignon conique (27) avec un une couronne (28).

3. Support selon la revendication 1, **caractérisé en ce que** les étages d'engrenages sont constitués des pignons coniques (27, 21 b) et seulement de la couronne (28), ladite couronne (28) présentant une denture supplémentaire qui est la roue conique (29) et remplace adéquatement la couronne (29).

4. Support selon la revendication 1 à 3, **caractérisé en ce que** la couronne (28) et/ou la couronne (29) est/sont agencée(s) sur un arbre de sortie (12) du mécanisme.

5. Support selon la revendication 1, **caractérisé en ce que** l'arbre de sortie (12) du mécanisme et la broche filetée (17), tout comme l'unité à pignons (21) sont montés de façon commune dans une partie porteuse de paliers (20).

6. Support selon la revendication 1 et 5, **caractérisé en ce que** des poches (22, 23, 25) ainsi que des emplacements de paliers (24) ouverts vers le haut sont prévus dans la partie porteuse de paliers (20).

7. Support selon les revendications 1, 5 et 6, **caractérisé en ce que** l'unité à pignons (21) est montée dans la partie porteuse de paliers (20).

8. Support selon la revendication 1, **caractérisé en ce que** l'unité à pignons (21) est constituée, selon une structure d'un seul tenant, du pignon (21 a) et du pignon conique (21 b) ainsi que d'un arbre (21 c), ou bien possède un axe fou.

9. Support selon la revendication 1, **caractérisé en ce que** le mécanisme à changement de vitesse comprend deux engrenages (34, 26) et deux pignons (21 a, 30), tels que l'engrenage (34) et le pignon (21 a) de l'étage de vitesse rapide sont agencés en avant de l'axe de la broche filetée (17), et l'engrenage (26) avec la zone formant pignon du pignon à tige creuse (30) pour l'étage de vitesse en charge sont agencés derrière l'axe de la broche filetée (17).

10. Support selon la revendication 1, **caractérisé en ce que** l'arbre de sortie du mécanisme (12) est agencé derrière la broche filetée (17).

11. Support selon la revendication 1, **caractérisé en ce qu'**il est prévu un pignon à tige creuse (30), dans lequel est monté l'arbre d'entrée (31) du mécanisme et qui présente au niveau de sa région terminale un renfoncement cylindrique (30a) ainsi qu'une fente transversale (30b) traversante.

12. Support selon la revendication 1, **caractérisé en ce que** l'arbre d'entrée (31) du mécanisme comprend des éléments d'entraînement (31 a) en dépassement radial, qui servent de parties d'accouplement pour l'arbre d'entrée (31) du mécanisme et qui sont amenés sélectivement en engagement avec l'engrenage (34), doté de gorges axiales (34a), ou avec le pignon à tige creuse (30).

13. Support selon la revendication 1, **caractérisé en ce que** l'arbre de sortie (12) du mécanisme présente une section essentiellement carrée, qui se loge en coopération de formes dans l'engrenage (26) et qui est fixé axialement via une douille à bourrelet.

14. Support selon la revendication 1, **caractérisé en ce qu'**un moteur est monté sur un support (10) raccordé au moyen de l'arbre d'entraînement (11), de telle façon qu'il est capable d'entraîner le pignon à tige creuse (30).
